# EUROPEAN PATENT APPLICATION

(11) **EP 3 113 522 A1**
(43) Date of publication of application: **04.01.2017**
(21) Application number: 15382343.0
(22) Date of filing: 29.06.2015
(51) Int. Cl.: H04W 4/00, H04W 4/02

(54) **METHOD AND SYSTEM FOR AUTOMATICALLY LINKING ELECTRONIC DEVICES BASED ON PROXIMITY**

(71) Applicant: Telefonica Digital España, S.L.U., 28013 Madrid (ES)
(72) Inventor: DIAZ FERNANDEZ, Felix, 28013 MADRID (ES); CRISENTI MARTIN, Miguel, Angel, 28013 MADRID (ES); FERRERO LEONARDO, Manuel, 28013 MADRID (ES)
(74) Representative: Carpintero Lopez, Francisco

(57) **Abstract**

Present invention refers to a method for automatically linking electronic devices based on proximity. The method comprises: receiving, by a central server, reporting identification information which uniquely identifies a first and a second electronic devices, through a telecommunication network; detecting, by the first electronic device, the second electronic device, if the second electronic device is within a certain distance from the first electronic device; sending, from the first electronic device to the central server, a notification message with an identification of the detected second electronic device; and storing in the central server an association between the first and the second electronic devices based on the notification message received.

## Description

### TECHNICAL FIELD OF THE INVENTION

Present invention generally relates to the field of telecommunications and more specifically to interconnection of electronic devices through a telecommunication network.

The object of present invention refers to automatically providing a link between electronic devices based on proximity and without human intervention, so that the electronic devices can interact through said link.

### BACKGROUND OF THE INVENTION

Nowadays, lots of tasks are performed by two or more electronic devices cooperating to manage events sharing data and directing instructions to a specific device. Basically, it is needed an identification of each device and some communication network.

For example, the Internet provides IP addresses to identify each device and enable the communication between devices as required. However, the mutual discovery and/or pairing/connection of two devices usually requires the interaction of a user to establish this interconnection, such as enable a WiFi link, accept a Bluetooth request, invoke an API service, etc. Even the systems that able to establish said interconnection in an automatic way, usually need a previous step of manually configuration where it is required human intervention, moreover they are limited to a specific set of addresses.

There are known solutions to establish a connection between two devices or systems, which would require to physically link the devices to a common network, as Ethernet or WiFi connection to common access point, but anyway it is needed some activity to be performed by the user in order to at least give information about one device address to the other, for instance any of the following: activating auxiliary connection systems, such as activation of Bluetooth; configuration of interfaces manually entering IP addresses; invoking a central service from both systems to a known IP address; execution of a specific application which is responsible to match the devices and trigger the establishment of the connection.

Some solutions resort to mobile apps which use geolocation to establish connection of two devices, but a GPS module is needed in order to obtain a proper accuracy and it is also known that a GPS module permanently activated involves high battery consumption.

Other solutions, propose method and systems for interacting with media screens using near filed communications, as the patent application US20140025504 which includes determining an identity of a near-field communication enabled mobile communications device in proximity to a display device, the display device including near-field communication capabilities and selecting content to communicate to the display device based on the determined identity of the near-field communication enabled mobile communications device. However, these systems are limited to show content in the media screen which is pre-assigned to the identity of the mobile device. It is not allow dynamically selecting content according to user interactions with the mobile device or further actions.

It is noted that existing solutions may work reasonably well for the general public for some use cases, however they pose problems for people with disabilities such as visual impairment.

For all these reasons, any solution to get devices associated in a seamless way without the need of complex human interaction would be a positive contribution to the state of art. This would be particularly useful for people with disabilities, who once the devices get associated can interwork to provide advanced services.

### SUMMARY OF THE INVENTION

Present invention solves the aforementioned problems by a solution which allows a richer interaction between devices without human intervention. It is presented a method for automatically linking electronic devices based on proximity comprising the following steps:
a) receiving, by a central server, a first message sent by a first electronic device (or a tracking device) reporting identification information which uniquely identifies said first electronic device, through a telecommunication network;
b) receiving, by a central server, a second message sent by a second electronic device (normally a portable device carried by a user) reporting identification information which uniquely identifies said second electronic device, through a telecommunication network;
c) detecting, by the first electronic device, the second electronic device, if the second electronic device is within a certain distance from the first electronic device;
d) sending, from the first electronic device to the central server, a notification message with an identification of the detected second electronic device;
e) storing in the central server an association between the first and the second electronic devices based on the notification message received.

Additionally, during the time that two devices remain associated, it is possible to perform some interactions. Then, present invention may comprise the steps of:
- performing a first action, by a user, on the second electronic device;
- sending, by the second electronic device, information associated to said action to the central server;
- searching, by the central server, devices associated to the second electronic device;
- finding the association between the first and second electronic devices stored in the central server;
- sending from the central server to the first electronic device, instructions to perform a second action based on the first action performed by the user.

For instance the second device device may be used as a peripheral for the associated first electronic device, and the interaction of the second electronic device with external items, e.g. reading documents or BIDI codes, may cause an effect on the first electronic device, e.g. showing specific information on a display associated to the read document/BIDI code.

Alternatively, actions to be performed on any of the first and second electronic devices may be triggered, by the central server, based on the association stored in the central system plus some context information.

In one embodiment of the invention, all the electronic devices have access to the Internet and the identification information which uniquely identifies each electronic device is an IP address. Thus, the central server keeps records of the IP addresses of each of the devices in a mapping table

Present invention may also comprise providing, by the central server, the electronic devices associated with each other's IP addresses. Thus, interconnection between them is allowed.

Optionally, present invention may further comprise, when storing or invalidating an association between the first and second device, sending, by the central server, an indication of the stored or invalidated association to at least one of the first and second electronic devices and in response performing the at least one of the first and second electronic devices a visual warning or/and sound to the devices. Thus, the user is warned that the association is established or finished.

Detecting the second electronic device may comprise that the detecting means of the first electronic device scan a certain space surrounding said first electronic device each certain period of time previously configured. Additionally, scanning the certain space surrounding the first electronic device each certain period of time loses a previously detected device, further comprising invalidating the association between both devices stored in the central server.

A second aspect of the invention refers to a system for automatically linking electronic devices based on proximity comprising:
- a first electronic device configured for sending messages to a central server reporting identification information which uniquely identifies said first electronic device, through a telecommunication network, wherein the first electronic device comprising detecting means configured for detecting a second electronic device within a certain distance from the first electronic device;
- a second electronic device configured for sending messages to a central server reporting identification information which uniquely identifies said second electronic device, through a telecommunication network, wherein the second electronic device comprising a radio-frequency tag;
- a central server configured for receiving messages sent by the first and second electronic devices reporting identification information which uniquely identifies said first and second electronic devices, through a telecommunication network; receiving notification messages from the first electronic device when the second electronic device is detected within a certain distance from the first electronic device; and storing an association between the first and the second electronic devices based on the notification message received.

Detecting means, according to different embodiments of the invention, comprise a NFC reader or a RFID reader and the radiofrequency-tag is a NFC chip or a RFID tag.

In one embodiment of the invention, the first electronic device is a fixed-location device and the second electronic device is a portable device. As a portable device, the second electronic device may be carried by a user.

Present invention may comprise a plurality of first and second electronic devices.

Another aspect of the invention refers to a booth comprising the first electronic device.

A last aspect of the present invention refers to a computer program product comprising computer program code adapted to perform the method according to any of the method claims when said program code is executed on a computer, a digital signal processor, a field-programmable gate array, an application-specific integrated circuit, a micro-processor, a micro-controller, or any other form of programmable hardware.

Present invention may comprise, according to one embodiment a display and a portable device as the fixed device will be able to display not only content adapted to the identity of the mobile device in the vicinity but content that can be dynamically determined based on the status of the portable device or user interactions with said portable device. This dynamic content can reside or be generated by the central server, located remotely from the fixed and the portable device, but connected to them by means of a network, in response to information sent by any of the devices to said central servers.

Therefore, present invention describes a method and system that advantageously creates a virtual link between two devices, a portable and a tracking device, the latter being in a preferred embodiment a fixed-location device. All devices in the system can be controlled in an inventory of devices, where there will be multiple portable devices equipped with NFC or RFID tags, e.g. each of them belonging to a user of the system and there will be multiple tracking devices equipped with a reader of NFC/RFID tags, which may be for instance fixed-location devices physically built into stations (e.g. in a booth). When a new tag is identified in the monitored space, the reader management software will inform the central system of the identity of the portable device in its vicinity in order to be added into a mapping table that keeps record of the IP addresses of each of the devices in the system, both tracking and portable devices, as well as the associations between tracking and portable devices. Thus, the central system is able to facilitate the interaction between the pairs of associated devices either providing them with each other's IP addresses or by allowing an indirect communication through the central system.

The association between devices may be defined as the necessary mutual knowledge for them to interact either directly or through an intermediate entity. For instance the devices could know each other's IP address or as in the preferred embodiment for this invention a central server knows the devices' IP addresses and could keep track of their mutual association so that they can interact through the central server.

Advantageously, present invention describes a method to get devices associated in a seamless and effective way without the need for complex human interaction, so that once associated they can interwork to provide advanced services. This solution is particularly useful for people with disabilities, as visual impairment, since the association of the devices is triggered just by automatically detecting them to be in physical proximity. Association establishment and release between the devices do not need any human interaction through the usual computer interfaces, nor does it require any technical knowledge. Therefore, the solution described involves an extreme ease of use. Additionally, present invention does not require expensive high drain energy components like GPS sensors.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows a block diagram according to one embodiment of the invention, where the portable device is out of the reading range of the tracking device, so there is no association between them.
**Figure 2****.-** shows a block diagram according to one embodiment of the invention, where the portable device is within the reading range of the tracking device, so an association between them is registered in the central system.
**Figure 3****.-** shows a flowchart of the interaction that can take place between the different elements of the architecture during the time that the Tracking Device and the Portable Device remain associated, according to one embodiment of the invention.
**Figure 4****.-** shows a flowchart, according to one embodiment of the invention, of yet another interaction that can take place between the different elements of the architecture during the time that the Tracking Device and Portable Device remain associated.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

The present invention discloses a method and system that creates a seamless association between electronic devices in proximity, where the proximity may be determined according to the reading range of the devices. Then, a logical network is established between two devices which meets the requirements of distance, being a logical network the one that appears to the user as a single, separate entity although it might in fact be either just a part of a larger network.

The multiple devices may be portable devices or fixed devices, but it is described below a specific configuration focused on the association of one portable device and a tracking device, the latter being in a preferred embodiment a fixed-location device. Portable devices include some kind of radiofrequency tags with an ID that identifies each portable device. Said tags can be based on a NFC chip or a RFID tag for example.

The tracking device has tag reader capabilities, for example an NFC reader or a RFID reader and associated software in order to act as a proximity device detector and to inform to a central system of the list of tag IDs accessible within the reading range.

All the devices are connected to a communication network and may be unambiguously identified, preferably via the Internet and the corresponding IP addresses, although their physical network connections may be different, such as 3G, 4G, WiFi or others. Then, the logical network is defined by its IP addressing scheme and, according to a preferred embodiment, the devices notify to a central server their IP addresses and any further IP address change.

The central server is then accessible by all the devices through the communication network, for example through said Internet connection. Said central server works as a central system where all devices' IP addresses are registered in order to create mapping tables with all the devices' associations and the devices' IP addresses. Additionally, any device may send messages to the central server to request the IP address of another device. The central server is configured to provide said IP addresses between associated devices. For example, it may be managed via web service.

The devices in proximity of a tracking device may be checked by periodically accessing the web service in the central system or this information can be pushed by the central system upon any change.

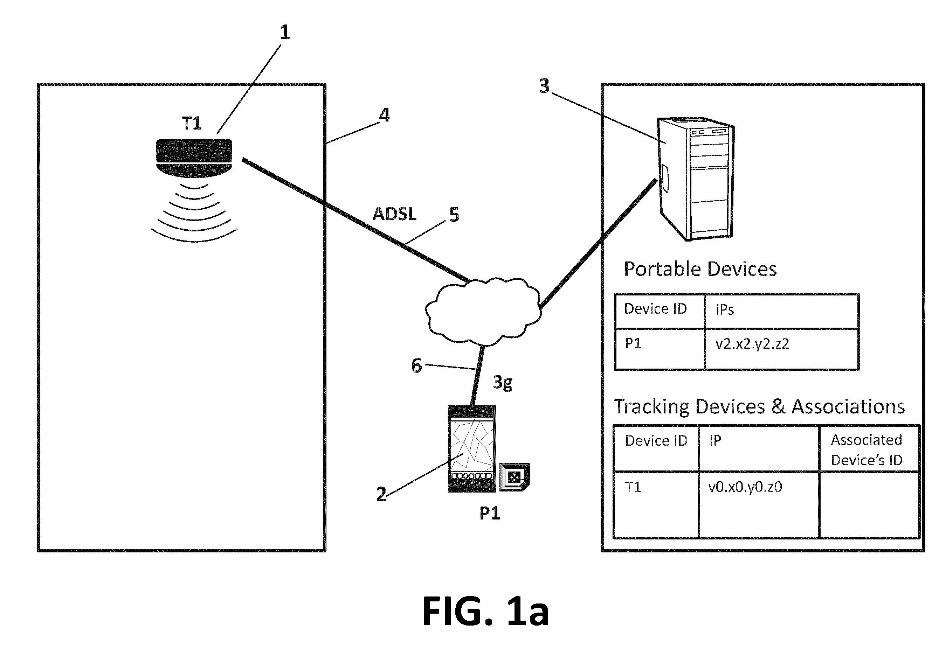

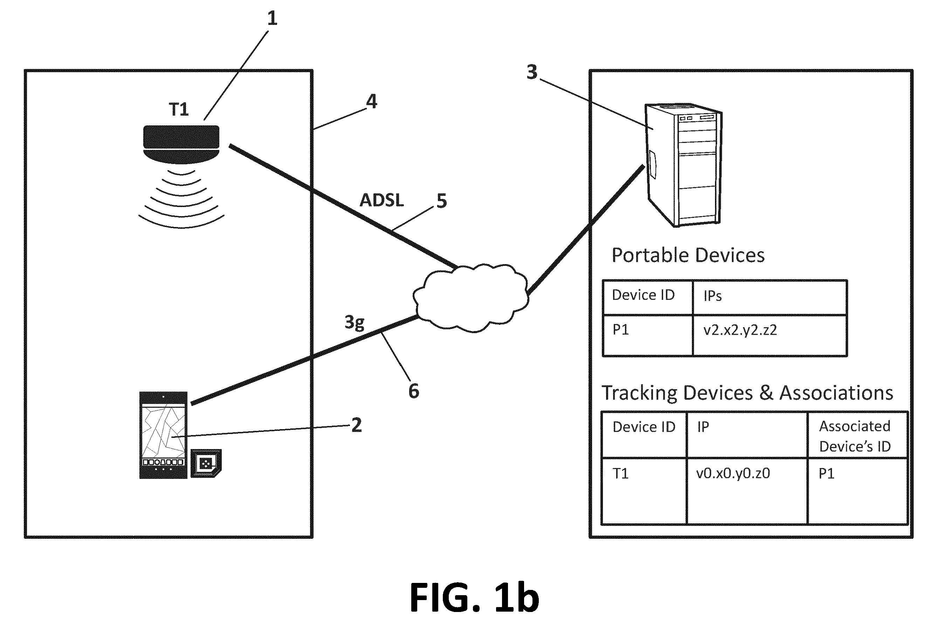

Figures 1A and 1B show the system's architecture, respectively before and after the association between the portable device and the tracking device. The tracking device (1) determines a reading range area (4) where a portable device (2) can be detected and identified by reading the ID associated to its tag. Both, the tracking device (1) and the portable device (2) send their IP Addresses to the central system (3) through a communication network, for example a wired connection as an ADSL connection (5) for the tracking device (in case it is a fixed-located device) and a wireless connection as 3G (6) for the portable device. In figure 1A, there is not any association between devices as the portable device is not within the reading range (4), so they are not considered as being in proximity. However, in figure 1B, a user carrying the portable device is moving and now the portable device is within the reading range. Then, the tracking device detects the portable device obtaining its ID and inform the central server, where an association between both devices is stored.

Eventually the portable device is disconnected, which entails a parallel paths of events where the periodical scanning carried out by the tracking device is no longer detecting the portable device and so, it informs the central system about the lost proximity.

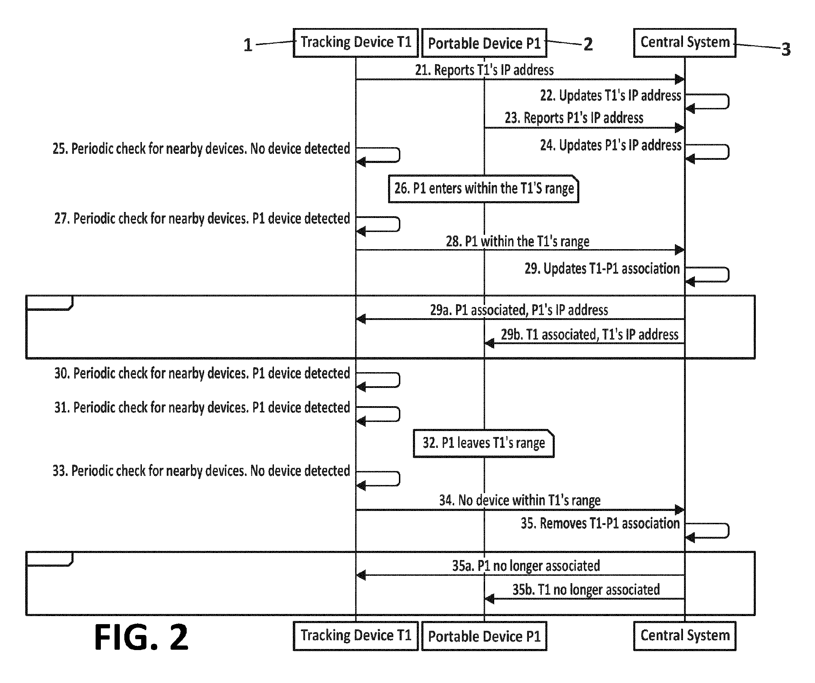

Figure 2 shows a flowchart of the process of association and later end of association between the two devices. Steps 21-24 are the set-up process of the system in which the different devices reports their IP address to the Central Server and this element stores them. Specifically, the Tracking Device T1 (1) reports its IP address (21) and the Central System stores it (22). Portable Device P1 (2) reports its IP address (23) and the Central System stores it (24).

Tracking device T1 periodically checks for nearby devices (25). While no device is detected no action is performed. At some point, Portable Device P1 enters within the Tracking Device reading range (26). At the next periodically check for nearby devices that T1 performs (27) P1 is detected in T1's vicinity. Then T1 reports to the Central System that P1 is within its range (28). As a result the Central System stores T1-P1 association (29) and, according to some embodiments of the invention, it may inform the devices about the association and each other's IP address (29a, 29b). T1 keeps on periodically checking for nearby devices and whilst associated device P1 keeps in range no further action is performed (30, 31). At some point Portable Device P1 leaves T1's reading range (32). At the next periodically check for nearby devices that T1 performs (33) no device is detected in T1's vicinity. Then T1 reports to the Central System that no device is within its range (34). Then the Central System removes T1-P1 association (35), and in some embodiments may inform the devices about the end of the association (35a, 35b).

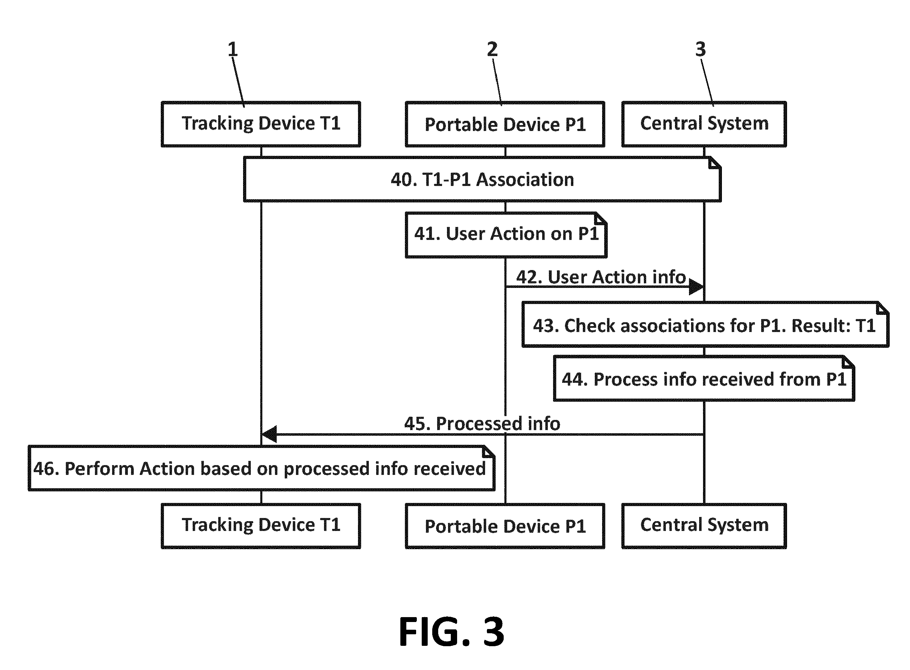

Figure 3 shows a flowchart of the interaction that can take place between the different elements of the architecture during the time that Tracking Device T1 (1) and Portable Device P1 (2) remain associated, according to one embodiment of the invention. Step 40 in Figure 3 represents the association between Tracking Device T1 and Portable Device P1 as it has already described in steps 26-29 from Figure 2. At a later point a user performs an action (41) on Portable Device P1, for instance reading a code like a bar code or a BIDI. Then P1 sends (42) information associated to the previously performed action to the Central Server. Then, the Central Server looks for devices associated to P1 (43). If no device is found, the process ends with no further action. In the case shown in Figure 3, T1 is retrieved as the associated device to P1. Then the Central System processes (44) the information received at step 42. This processing may imply interacting with external systems and taking as entry point the identities of the two associated devices T1 and P1, and the information received at step 42 produces a processed info, which is sent (45) to T1. Then T1 performs a further action (46) based on the processed info received, for instance showing the processed information in its display.

One embodiment of the present invention consists on a booth comprising a fixed-location tracking device. It may be for example a lottery booth, which can be occupied by different lottery sellers in different moments. The tracking device includes some tag reader equipment, that is NFC reader, RFID reader or something similar, a reader processing unit and a display unit. The users of the booth, the lottery sellers in this case, carry a personal portable device equipped with the corresponding tags, NFC, RFID or something similar, which whenever the user carrying the personal portable device is placed in the vicinity of a lottery booth's tracking device, triggers the association between the lottery booth and the portable device, and thus with the specific lottery seller. This association is seamless and does not require any interaction by the lottery seller beyond placing his/her personal portable device in a specific place within the range of the tracking device's reader. Thus the association can be easily performed even by impaired lottery sellers (e.g. visually impaired). Once the association is active, richer services can be offered in cooperation by the different elements of the system. For instance the portable device may have a reader that reads codes (e.g. bar codes, BIDI) printed in a lottery ticket that univocally identifies that ticket, and then it submits the lottery ticket identifier to the Central Server, which in turn may check with a prizes database whether there is a prize associated to that ticket. The result of this checking may be sent to the associated lottery booth and be shown in its display so that the owner of the lottery ticket can easily see this information.

Another service may involve printing lottery tickets from the portable device of the lottery seller. Upon a request to print one with a simple interaction of the lottery seller, the portable device submit the request to the Central System, which in turn checks the price of the lottery ticket and send it to the associated lottery booth to be displayed, so that the purchaser knows how much he/she has to pay in an effective and simple way.

Therefore, the temporary association of the portable device and the tracking device placed in the lottery booth makes the work of lottery sellers much easier (above all for the visually impaired) as they are supported and synchronized with a central system without requiring any action.

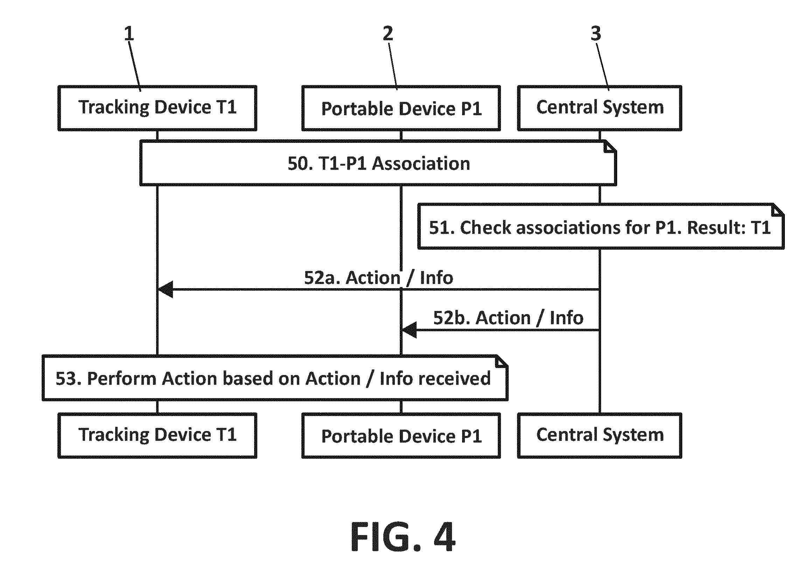

Figure 4 shows a flowchart, according to one embodiment of the invention, of yet another interaction that can take place between the different elements of the architecture during the time that Tracking Device T1 and Portable Device P1 remain associated. Step 50 shows the association between Tracking Device T1 and Portable Device P1 as described in steps 26-29 from figure 2. In this case the trigger happens (51) in the Central Server based on the T1-P1 association plus eventually other context information. Then a request to perform an action and/or information is sent from the Central Server to T1 (52a) and/or P1 (52b). The T1 and/or P1 perform an action (53) based on the request /info received from the central server, either separately or collaboratively. As an example of this kind of actions, one embodiment of the invention referred to Lottery may be as follows: the Lottery initiates a promotion with discount lottery tickets to those lottery sellers who have sold fewer tickets in the day. The Central Systems checks which those sellers are and which the lottery booth to which they are associated is. Then it sends details on the promotion both to the lottery booth to be shown in its display and to the lottery seller's portable device to play an audio notice about the promotion.

## Claims

1. Method for automatically linking electronic devices based on proximity, the method is **characterized by** comprising the following steps:
a) receiving, by a central server, a first message sent by a first electronic device reporting identification information which uniquely identifies said first electronic device, through a telecommunication network;
b) receiving, by a central server, a second message sent by a second electronic device reporting identification information which uniquely identifies said second electronic device, through a telecommunication network;
c) detecting, by the first electronic device, the second electronic device, if the second electronic device is within a certain distance from the first electronic device;
d) sending, from the first electronic device to the central server, a notification message with an identification of the detected second electronic device;
e) storing in the central server an association between the first and the second electronic devices based on the notification message received.

2. Method according to claim 1, further comprising the following steps:
- performing a first action, by a user, on the second electronic device;
- sending, by the second electronic device, information associated to said action to the central server;
- searching, by the central server, devices associated to the second electronic device;
- finding the association between the first and second electronic devices stored in the central server;
- sending from the central server to the first electronic device, instructions to perform a second action based on the first action performed by the user.

3. Method according to any one of the previous claims further comprising triggering, by the central server, an action to be performed on any of the first and second electronic devices based on the association stored in the central system plus some context information.

4. Method according to any one of the previous claims wherein all the electronic devices have access to the Internet and the identification information which uniquely identifies each electronic device is an IP address.

5. Method according to claim 4 wherein the central server storing associations, further comprising keeping records of the IP addresses of each of the devices in a mapping table.

6. Method according to any one of previous claims further comprising providing, by the central server, the electronic devices associated with each other's IP addresses.

7. Method according to any one of previous claims, wherein detecting the second electronic device comprises the detecting means of the first electronic device scanning a certain space surrounding said first electronic device each certain period of time previously configured.

8. Method according to claim 7, wherein scanning the certain space surrounding the first electronic device each certain period of time loses a previously detected device, further comprising invalidating the association between both devices stored in the central server.

9. Method according to any one of the previous claims 6, 8 wherein storing or invalidating an association between the first and second device further comprising sending, by the central server, an indication of the stored or invalidated association to at least one of the first and second electronic devices and in response performing the at least one of the first and second electronic devices a visual warning or/and sound.

10. System for automatically linking electronic devices based on proximity, the system is **characterized by** comprising:
- a first electronic device configured for sending messages to a central server reporting identification information which uniquely identifies said first electronic device, through a telecommunication network, wherein the first electronic device comprising detecting means configured for detecting a second electronic device within a certain distance from the first electronic device;
- a second electronic device configured for sending messages to a central server reporting identification information which uniquely identifies said second electronic device, through a telecommunication network, wherein the second electronic device comprising a radio-frequency tag;
- a central server configured for receiving messages sent by the first and second electronic devices reporting identification information which uniquely identifies said first and second electronic devices, through a telecommunication network; receiving notification messages from the first electronic device when the second electronic device is detected within a certain distance from the first electronic device; and storing an association between the first and the second electronic devices based on the notification message received.

11. System according to claim 10 wherein the detecting means are a NFC reader or a RFID reader and the radiofrequency-tag is a NFC chip or a RFID tag.

12. System according to any one of claims 10-11 wherein the first electronic device is a fixed-location device and the second electronic device is a portable device.

13. System according to any one of claim 10-12, further comprising a plurality of first and second electronic devices

14. A booth comprising the first electronic device according to any one of claim 10-13.

15. A computer program product comprising computer program code adapted to perform the method according to any of the claims 1-9 when said program code is executed on a computer, a digital signal processor, a field-programmable gate array, an application-specific integrated circuit, a micro-processor, a micro-controller, or any other form of programmable hardware.
